# EUROPÄISCHE PATENTSCHRIFT

(11) **EP 4 367 011 B1**
(45) Veröffentlichungstag und Bekanntmachung des Hinweises auf die Patenterteilung: **01.10.2025**
(21) Anmeldenummer: 22740891.1
(22) Anmeldetag: 07.07.2022
(51) Int. Cl.: B62M 6/55, B62M 6/45

(54) **ANTRIEBSSYSTEM FÜR EIN ELEKTROFAHRRAD MIT NOTLAUFBETRIEB UND STEUERUNGSVERFAHREN**
DRIVE SYSTEM FOR AN ELECTRIC BICYCLE HAVING AN EMERGENCY MODE, AND CONTROL METHOD
SYSTÈME D'ENTRAÎNEMENT POUR UNE BICYCLETTE ÉLECTRIQUE PRÉSENTANT UN MODE D'URGENCE, ET PROCÉDÉ DE COMMANDE

(30) Priorität: 08.07.2021 DE 102021207255
(43) Veröffentlichungstag der Anmeldung: 15.05.2024
(73) Patentinhaber: Brose Antriebstechnik GmbH & Co. Kommanditgesellschaft, Berlin, 10553 Berlin (DE)
(72) Erfinder: WILMS, Christian, 40591 Düsseldorf (DE); KLETT, Thomas, 34130 Kassel (DE); WAHL, Martin-Maximilian, 16540 Hohen Neuendorf (DE)
(74) Vertreter: Maikowski & Ninnemann Patentanwälte Partnerschaft mbB
(86) Internationale Anmeldenummer: PCT/EP2022/068922
(87) Internationale Veröffentlichungsnummer: WO 2023/280983

(56) Entgegenhaltungen:
- WO-A1-2019/166402
- WO-A1-2019/175022
- JP-A- 2008 285 069

## Beschreibung

Die vorgeschlagene Lösung betrifft ein Antriebssystem für ein Elektrofahrrad sowie eine Steuerungsverfahren.

Es ist bekannt, an einem Elektrofahrrad, mithin an einem sogenannten E-Bike oder Pedelec, zwei Elektromotoren in Kombination mit einem eine Planetenradstufe aufweisenden Überlagerungsgetriebe einzusetzen, um ein Übersetzungsverhältnis zwischen Antrieb und Abtrieb stufenlos einzustellen. Ein entsprechendes Antriebssystem weist hierbei zum einen eine Antriebswelle auf, über die ein von einem Fahrer des Elektrofahrrads erzeugtes Antriebsdrehmoment eingeleitet werden kann und an der hierfür Pedale vorgesehen sind. Über eine mit einem Rad des Elektrofahrrads zu koppelnde Abtriebswelle des Antriebssystems wird dann ein an der Antriebswelle eingeleitetes Antriebsdrehmoment und/oder ein elektromotorisch erzeugtes Drehmoment an ein Rad, üblicherweise ein Hinterrad des Elektrofahrrads, übertragen. Über das Überlagerungsgetriebe sind die Antriebswelle und die Abtriebswelle miteinander gekoppelt, wobei ein von einem ersten Elektromotor der zwei Elektromotoren erzeugtes Drehmoment zumindest teilweise an die Abtriebswelle übertragbar ist. Über den zweiten Elektromotor der zwei Elektromotoren ist ein Übersetzungsverhältnis stufenlos einstellbar, sodass das Elektrofahrrad über ein Antriebsdrehmoment des ersten Elektromotors beschleunigbar ist, ohne dass hierfür an der Antriebswelle schneller oder mit größerer Kraft gedreht werden müsste. Der zweite Elektromotor dient derart auch der Abstützung des von dem ersten Elektromotor erzeugten Drehmoments und kann hierfür je nach Übersetzungsverhältnis eine Rotorwelle in unterschiedliche Drehrichtungen drehen. Eine Antriebsvorrichtung für ein Elektrofahrrad mit einem vergleichbaren Überlagerungsgetriebe und zwei Elektromotoren ist hierbei beispielsweise aus der JP 2008-285069 A, WO 2019/166402 A1 oder WO 2019/175022 A1 bekannt. Dokument WO2019/166402A1 zeigt die Präambel des Anspruchs 1.

Bei dem aus der WO 2019/175022 A1 bekannten Antriebssystem ist ein Notlaufbetrieb vorgesehen, der durch einen Freilauf realisiert wird. Durch den Freilauf ist gewährleistet, dass eine muskelkraftbetätigt an der Antriebswelle aufgebrachte Leistung noch zum Antrieb des Elektrofahrrads genutzt werden kann, auch wenn über einen Energiespeicher (mithin z.B. eine Batterie) des Antriebssystems kein elektrischer Strom zum Betreiben der ersten und zweiten Elektromotoren zur Verfügung gestellt werden kann. Nachteil des in der WO 2019/175022 A1 beschriebenen Notlaufbetriebs ist jedoch, dass dann nur ein fest eingestelltes Übersetzungsverhältnis vorgegeben ist und das Übersetzungsverhältnis des Überlagerungsgetriebes nicht mehr stufenlos variiert werden kann. Eine stufenlose Automatik-Getriebe-Funktion, die in einem Normalbetrieb des Antriebssystems bereitgestellt wird, ist somit nicht mehr verfügbar. Die fest eingestellte Übersetzung im Notlaufbetrieb kann dann beispielsweise der kleinsten Übersetzung entsprechen, die auch in einem Normalbetrieb nutzbar ist. Mit einer derart kleinen Übersetzung lassen sich aber nur vergleichsweise geringe Geschwindigkeiten realisieren, auch wenn die Antriebswelle muskelkraftbetätigt mit hoher Trittfrequenz gedreht wird.

Der vorgeschlagenen Lösung liegt vor diesem Hintergrund die Aufgabe zugrunde, ein in dieser Hinsicht verbessertes Antriebssystem bereitzustellen.

Diese Aufgabe ist mit einem Antriebssystem des Anspruchs 1 sowie einem Steuerungsverfahren des Anspruchs 12 gelöst
Ein vorgeschlagenes Antriebssystem umfasst dabei wenigstens
- eine Antriebswelle,
- eine Abtriebswelle zum Antreiben eines Rades eines Elektrofahrrads,
- einen ersten Elektromotor, der eine erste Rotorwelle antreibt,
- einen zweiten Elektromotor, der eine zweiten Rotorwelle antreibt,
- ein Überlagerungsgetriebe, dessen Übersetzungsverhältnis mithilfe der ersten und zweiten Elektromotoren stufenlos einstellbar ist und über das die Antriebswelle und die Abtriebswelle miteinander gekoppelt sind, wobei ein von dem ersten Elektromotor erzeugtes Drehmoment zumindest teilweise an die Abtriebswelle übertragbar ist, und
- einen Energiespeicher für die Versorgung der ersten und zweiten Elektromotoren mit elektrischen Strom (in einem Normalbetrieb des Antriebssystems).

Ergänzend ist eine Steuerelektronik (z.B. bereitgestellt über eine Steuerungssoftware) für eine Leistungssteuerung der ersten und zweiten Elektromotoren in einem Notlaufbetrieb des Antriebssystems vorgesehen. Der Notlaufbetrieb ist hierbei aktiv, wenn die ersten und zweiten Elektromotoren über den Energiespeicher nicht mit elektrischem Strom versorgt werden können, beispielsweise weil der Energiespeicher entfernt wurden, defekt oder leer ist. Über die Steuerelektronik ist dann mindestens einer der ersten und zweiten Elektromotoren in dem Notlaufbetrieb wenigstens temporär generatorisch betreibbar, um eine an der Antriebswelle muskelkraftbetätigt aufgebrachte (mechanische) Leistung in elektrische Energie umzuwandeln, mit der eine stufenlose Variation des Übersetzungsverhältnisses des Überlagerungsgetriebes auch im Notlaufbetrieb ermöglicht wird und durch die Steuerelektronik steuerbar ist.

Grundgedanke der vorgeschlagenen Lösung ist somit eine Steuerelektronik bereitzustellen, die eingerichtet ist, mindestens einen der ersten und zweiten Elektromotoren in dem Notlaufbetrieb wenigstens temporär generatorisch zu betreiben und damit eine stufenlose Variation des Übersetzungsverhältnisses des Überlagerungsgetriebes auch noch im Notlaufbetrieb zu ermöglichen. Für die über das Überlagerungsgetriebe bereitgestellte Automatik-Getriebe-Funktion wird folglich im Notlaufbetrieb die notwendige elektrische Leistung durch mindestens einen der beiden Elektromotoren zur Verfügung gestellt, wobei über die vorgesehene Steuerelektronik die beiden Elektromotoren entsprechend angesteuert werden. Derart kann wenigstens einer der Elektromotoren im Generatorbetrieb genutzt werden, um zumindest einen Teil der von einem Fahrer des Elektrofahrrads eingebrachten mechanischen Leistung in elektrische Leistung umzuwandeln.

Beispielsweise ist die Steuerelektronik eingerichtet, das Antriebssystem in Abhängigkeit von einem Energiespeichersignal in den Notlaufbetrieb zu schalten und die ersten und zweiten Elektromotoren dann unterschiedlich zu einem Normalbetrieb anzusteuern. Über das Energiespeichersignal wird dabei der Steuerelektronik signalisiert, ob über einen Energiespeicher des Antriebssystems noch ausreichend elektrische Energie zur Verfügung gestellt wird. Hierbei kann die Signalisierung eines veränderten Zustands und damit zur Schaltung in den Notlaufbetrieb insbesondere durch die Abwesenheit des Energiespeichersignals erfolgen. Das Energiespeichersignal ist dementsprechend auch dazu geeignet, zu signalisieren, ob ein Energiespeicher überhaupt noch vorhanden ist. Beispielsweise wird somit über das Energiespeichersignal die Präsenz eines fehlerfrei funktionierenden Energiespeichers, mithin einer Batterie, signalisiert. Wurde die Batterie entfernt oder ist die Batterie defekt oder leer, wird dies der Steuerelektronik über das Energiespeichersignal signalisiert und hiermit von der Steuerelektronik das Antriebssystem in den Notlaufbetrieb geschaltet. In dem Notlaufbetrieb des Antriebssystems wird dann wenigstens einer der ersten und zweiten Elektromotoren durch die Steuerelektronik im Vergleich zu einem Normalbetrieb abweichend angesteuert, um das Übersetzungsverhältnis des Überlagerungsgetriebes auch im Notlaufbetrieb weiterhin elektronisch stufenlos anzupassen.

In einem Ausführungsbeispiel ist die Steuerelektronik beispielsweise eingerichtet, in dem Notlaufbetrieb einen der Elektromotoren mit dem Ziel anzusteuern, eine elektrische Energiebilanz innerhalb des Antriebssystems zu Null zu regeln. Die Steuerelektronik ist dementsprechend beispielsweise eingerichtet, Messsignale zu verarbeiten, über die jeweils eine aktuell zur Verfügung gestellte oder verbrauchte Leistung der einzelnen Elektromotoren signalisiert wird. Darüber hinaus kann die Steuerelektronik gegebenenfalls auch Messsignale zu einem Leistungsverbrauch etwaiger innerhalb des Antriebssystems vorhandener Verbraucher oder mit dem Antriebssystem gekoppelter Verbraucher verarbeiten. In Abhängigkeit von anhand dieser Messsignale ermittelten Leistungswerten und sich einer daraus ergebenden Energiebilanz ist die Steuerelektronik dann in der Lage, einen der Elektromotoren im Notlaufbetrieb derart anzusteuern, dass die Energiebilanz zu Null geregelt wird. Mit anderen Worten wird von der Steuerelektronik im Notlaufbetrieb die Leistung dieses Elektromotors derart geregelt, dass eine Energiebilanz von Null erreicht wird.

In einer Ausführungsvariante ist die Steuerelektronik in diesem Zusammenhang beispielsweise eingerichtet,
- den zweiten Elektromotor entsprechend einem Normalbetrieb, bei dem über den Energiespeicher die Versorgung der ersten und zweiten Elektromotoren mit elektrischem Strom erfolgt, anzusteuern und
- den ersten Elektromotor des Antriebssystems mit dem Ziel anzusteuern, eine elektrische Energiebilanz innerhalb des Antriebssystems zu Null zu regeln.

Über die Steuerelektronik und die hiermit umgesetzte Regelung wird folglich im Notlaufbetrieb des Antriebssystems eine Ansteuerung des zweiten Elektromotors wie im Normalbetrieb unverändert aufrechterhalten, aber in Abweichung zum Normalbetrieb eine energiebilanzabhängige Regelung des ersten Elektromotors vorgesehen. In der Regel wird folglich einer der Elektromotoren generatorisch und der andere motorisch betrieben, wenn der Notlaufbetrieb des Antriebssystems aktiv ist.

Wie bereits vorstehend ausgeführt, kann insbesondere in diesem Zusammenhang die Steuerelektronik für die Leistungssteuerung der ersten und zweiten Elektromotoren im Notlaufbetrieb eingerichtet sein, für die Regelung der Elektromotoren eine Leistungsaufnahme wenigstens eines über das Antriebssystem mit elektrischer Energie versorgten Verbrauchers und/oder eine Verlustleistung zu berücksichtigen. Hierbei kann folglich eine entsprechende Leistungsaufnahme und/oder Verlustleistung erfasst und durch die Steuerelektronik ausgewertet werden, um insbesondere hiervon abhängig den einen Elektromotor zu einem generatorischen oder motorischen Betrieb (mit variierender Leistung) anzusteuern. Wird beispielsweise der erste Elektromotor seitens der Leistungssteuerung im Notlaufbetrieb mit dem Ziel angesteuert, eine elektrische Energiebilanz innerhalb des Antriebssystems zu Null zu regeln, fließt in die energiebilanzabhängige Regelung des ersten Elektromotors auch eine Leistungsaufnahme wenigstens eines über das Antriebssystem mit elektrischer Energie versorgten Verbrauchers und/oder eine gemessene Verlustleistung ein.

In einer Ausführungsvariante umfasst das Antriebssystem mindestens einen mit der Steuerelektronik verbundenen Energiepuffer, der zum Puffern von Ladung und damit zur Bereitstellung einer Zwischenkreisspannung eingerichtet und vorgesehen ist. Mit dem Vorsehen eines Zwischenkreises über mindestens einen zugehörigen Energiepuffer kann der Notlaufbetrieb dabei gegebenenfalls stabiler geregelt werden.

Beispielsweise kann die Steuerelektronik eingerichtet sein, einen der Elektromotoren mit dem Ziel anzusteuern, die Zwischenkreisspannung auf einem bestimmten Spannungswert zu halten. Eine mit der Steuerelektronik bereitgestellte Regelung zielt dann folglich darauf ab, die Zwischenkreisspannung und damit die im Antriebssystem vorhandene elektrische Energie auf einem konstanten (Spannungs-) Wert zu halten. Die Zwischenkreisspannung kann hierbei auch kontinuierlich gemessen werden, da diese eine unmittelbare Rückmeldung über die im Antriebssystem vorhandene elektrische Energie darstellt. So kann die Steuerelektronik zur Verarbeitung eines Messsignals eingerichtet sein, das für die aktuelle Zwischenkreisspannung des Antriebssystems repräsentativ ist. Auf Basis dieses Messsignals kann ein Ist-Spannungswert ermittelt und mit wenigstens einem Soll-Spannungswert verglichen werden. Dieser Soll-Spannungswert kann in einem Speicher der Steuerelektronik hinterlegt oder der Steuerelektronik über ein separates Spannungssignal zur Verfügung gestellt werden.

Mithilfe des für die aktuelle Zwischenkreisspannung repräsentativen Messwerts kann die Steuerelektronik dann beispielsweise den ersten Elektromotor derart ansteuern, dass, wenn der Ist-Spannungswert unter einen ersten Soll-Spannungswert abfällt,
- der erste Elektromotor zu einer höheren Stromerzeugung angesteuert wird, wenn der ersten Elektromotor aktuell generatorisch betrieben wird, oder
- der erste Elektromotor zu einer niedrigeren Leistungsaufnahme angesteuert wird, wenn der erste Elektromotor aktuell motorisch betrieben wird.

So kann es grundsätzlich insbesondere unter Berücksichtigung einer Leistungsaufnahme wenigstens eines Verbrauchers und/oder einer Verlustleistung dazu kommen, dass sowohl der erste Elektromotor als auch der zweite Elektromotor im Laufe des Notlaufbetriebs motorisch oder generatorisch betrieben werden. Sinkt nun aber die Zwischenkreisspannung unter den ersten Soll-Spannungswert ab, so sieht die vorgeschlagene Ausführungsvariante vor, den ersten Elektromotor stärker in Richtung des generatorischen Betriebs zu fahren, um dem Antriebssystem mehr Energie zuzuführen (wenn der ersten Elektromotor aktuell bereits generatorisch betrieben wird) respektive dem Antriebssystem weniger Energie zu entnehmen (wenn der erste Elektromotor aktuell motorisch betrieben wird).

Alternativ oder ergänzend kann die Steuerelektronik eingerichtet sein, den ersten Elektromotor in Abhängigkeit von dem für die aktuelle Zwischenkreisspannung repräsentativen Messsignal anzusteuern, und zwar derart, dass, wenn der Ist-Spannungswert über einen zweiten Soll-Spannungswert ansteigt,
- der erste Elektromotor zu einer niedrigeren Stromerzeugung angesteuert wird, wenn der erste Elektromotor aktuell generatorisch betrieben wird, oder
- der erste Elektromotor zu einer höheren Leistungsaufnahme angesteuert wird, wenn der erste Elektromotor aktuell motorisch betrieben wird.

Bei dieser Ausführungsvariante ist folglich vorgesehen, dass der erste Elektromotor stärker in Richtung des motorischen Betriebs gefahren wird, um dem Antriebssystem weniger Energie zuzuführen (wenn der erste Elektromotor aktuell generatorisch betrieben wird) bzw. mehr Energie zu entnehmen (wenn der erste Elektromotor aktuell bereit motorisch betrieben wird), wenn die Zwischenkreisspannung über einen bestimmten Sollwert ansteigt.

Grundsätzlich können der erste und zweite Soll-Spannungswert identisch sein, sodass für die Regelung genau ein Soll-Spannungswert maßgeblich ist. Um bei einer Kombination der beiden vorstehend beschriebenen Ausführungsbeispielen zu vermeiden, dass eine über die Steuerelektronik bereitgestellte Regelung sofort eingreift, wenn ein bestimmter Soll-Spannungswert über- oder unterschritten wird, kann mit unterschiedlichen ersten und zweiten Soll-Spannungswerten gearbeitet werden. In einem Toleranzbereich zwischen dem ersten Soll-Spannungswert und dem zweiten Soll-Spannungswert erfolgt dann über die Steuerelektronik folglich kein Eingriff und mithin keine veränderte Ansteuerung des ersten Elektromotors.

Ein Aspekt der vorliegenden Lösung betrifft auch ein Elektrofahrrad mit einem vorgeschlagenen Antriebssystem.

Darüber hinaus ist ein Steuerungsverfahren vorgeschlagen, bei dem ein Antriebssystem für ein Elektrofahrrad (ein motorisch unterstütztes Fahrrad) in einem Notlaufbetrieb betrieben wird, wenn erste und zweite Elektromotoren des Antriebssystems über einen Energiespeicher nicht mit elektrischem Strom versorgt werden können. Dabei wird in dem Notlaufbetrieb mindestens einer der ersten und zweiten Elektromotoren wenigstens temporär generatorisch betrieben, um eine an einer Antriebswelle des Antriebssystems muskelkraftbetätigt aufgebrachte (mechanische) Leistung in elektrische Energie umzuwandeln, mit der eine stufenlose Variation eines Übersetzungsverhältnisses eines Überlagerungsgetriebes des Antriebssystems auch im Notlaufbetrieb ermöglicht und gesteuert wird.

Eine Ausführungsvariante eines vorgeschlagenen Steuerungsverfahrens ist insbesondere mit einer Ausführungsvariante eines vorgeschlagenen Antriebssystems umsetzbar. Dementsprechend gelten vorstehend und nachfolgend genannte Vorteile und Merkmale für eine Ausführungsvariante eines vorgeschlagenen Antriebssystems auch für Ausführungsvarianten eines vorgeschlagenen Steuerungsverfahrens und umgekehrt.

So kann eine Ausführungsvariante eines vorgeschlagenen Steuerungsverfahrens beispielsweise vorsehen, dass in dem Notlaufbetrieb
- der zweite Elektromotor entsprechend einem Normalbetrieb, bei dem über den Energiespeicher wenigstens temporär die Versorgung der ersten und zweiten Elektromotoren mit elektrischem Strom erfolgt (und gegebenenfalls nur zweitweise einer der Elektromotor generatorisch betrieben wird und den Energiespeicher versorgt), angesteuert wird und
- der erste Elektromotor mit dem Ziel angesteuert wird, eine elektrische Energiebilanz innerhalb des Antriebssystems zu Null zu regeln.

Es ist auch hier folglich im Notlaufbetrieb eine energiebilanzabhängige Leistungssteuerung und damit energiebilanzabhängige Regelung des ersten Elektromotors vorgesehen.

Alternativ oder ergänzend kann das Antriebssystem mindestens einen Energiepuffer zur Erzeugung einer Zwischenkreisspannung in dem Notlaufbetrieb für die Versorgung wenigstens einen der Elektromotoren mit elektrischem Strom umfassen. Einer der Elektromotoren kann dann mit dem Ziel angesteuert werden, die Zwischenkreisspannung auf einen bestimmten Spannungswert zu halten. Eine vorgesehene Regelung zielt dabei dann folglich angesichts wechselnder, an der Antriebswelle muskelkraftbetätigt aufgebrachter mechanischer Leistung darauf ab, die Zwischenkreisspannung für die Versorgung des zweiten Elektromotors auf einem konstanten Spannungswert zu halten.

Die vorgeschlagene Lösung umfasst ferner ein Computerprogrammprodukt, beispielsweise verkörpert durch eine in einer Steuerelektronik implementierte Steuerungssoftware, die gespeicherte Anweisungen enthält, die bei einer Ausführung durch mindestens einen Prozessor der Steuerelektronik, den mindestens einen Prozessor veranlassen, eine Ausführungsvariante eines vorgeschlagenen Steuerungsverfahrens auszuführen.

Die beigefügten Figuren veranschaulichen exemplarisch Ausführungsvarianten der vorgeschlagenen Lösung. Insbesondere kann die vorgeschlagene Lösung hierbei in Kombination mit einem Antriebssystem Anwendung finden, wie es bereits in der WO 2019/175022 A1 beschrieben wurde. Hierauf ist die vorgeschlagene Lösung jedoch nicht beschränkt.

Hierbei zeigen:
- Figur 1: Details zu einer Steuerelektronik für eine Leistungssteuerung eines Antriebssystems für ein Elektrofahrrad in einem Notlaufbetrieb, wobei dieses Antriebssystem beispielsweise gemäß einer der Ausführungsvarianten der Figuren 4 bis 7 aufgebaut sein kann;
- Figur 2: eine Weiterbildung der Variante der Figur 1 mit einem Energiepuffer und einer energiebilanzabhängigen Regelung für einen ersten Elektromotor des Antriebssystems;
- Figur 3: eine Weiterbildung der Ausführungsvariante der Figur 2, bei der ebenfalls eine Zwischenkreisspannung vorgesehen, diese aber im Unterschied zu der Ausführungsvariante der Figur 2 auch zur Regelung des ersten Elektromotors genutzt wird;
- Figur 4: ein aus dem Stand der Technik bekanntes Antriebssystem mit abtriebsseitiger Leistungsverzweigung;
- Figur 5: einen konstruktiven Entwurf des Antriebssystems nach Figur 4;
- Figur 6: ein aus dem Stand der Technik bekanntes Antriebssystem mit antriebsseitiger Leistungsverzweigung,
- Figur 7: einen konstruktiven Entwurf des Antriebssystems nach Figur 6;
- Figuren 8A-8B: Diagramme zur Veranschaulichung des Betriebs des Antriebssystems, wobei im Diagramm der Figur 8A eine Leistung P zweiter Elektromotoren des Antriebssystems über einer (Fahr-) Geschwindigkeit aufgetragen ist und im Diagramm der Figur 8B eine durch einen Fahrer des Elektrofahrrads zu bewirkende Drehzahl einer Antriebswelle des Antriebssystem über der Geschwindigkeit v.

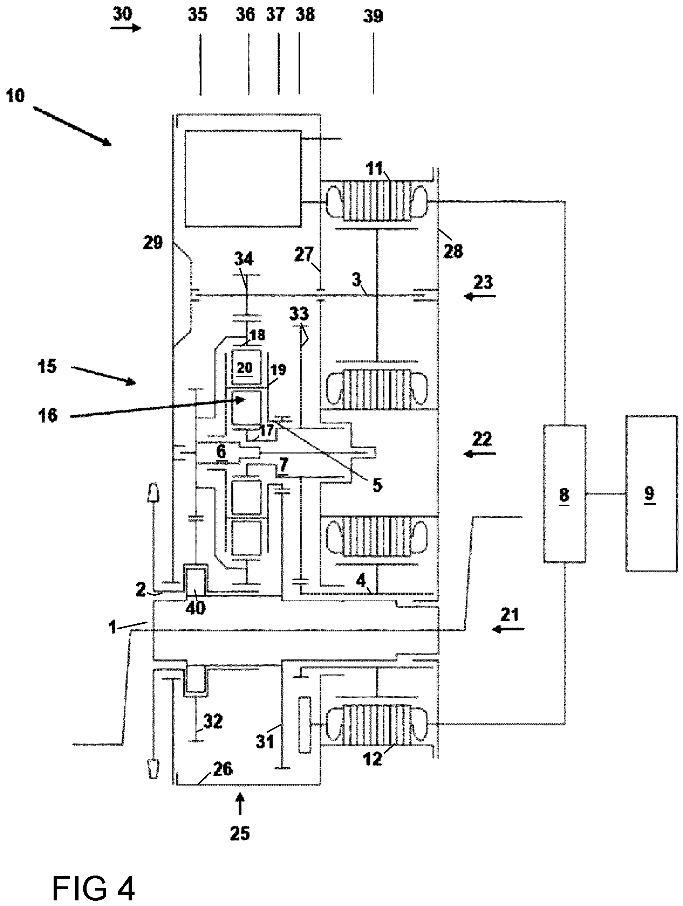

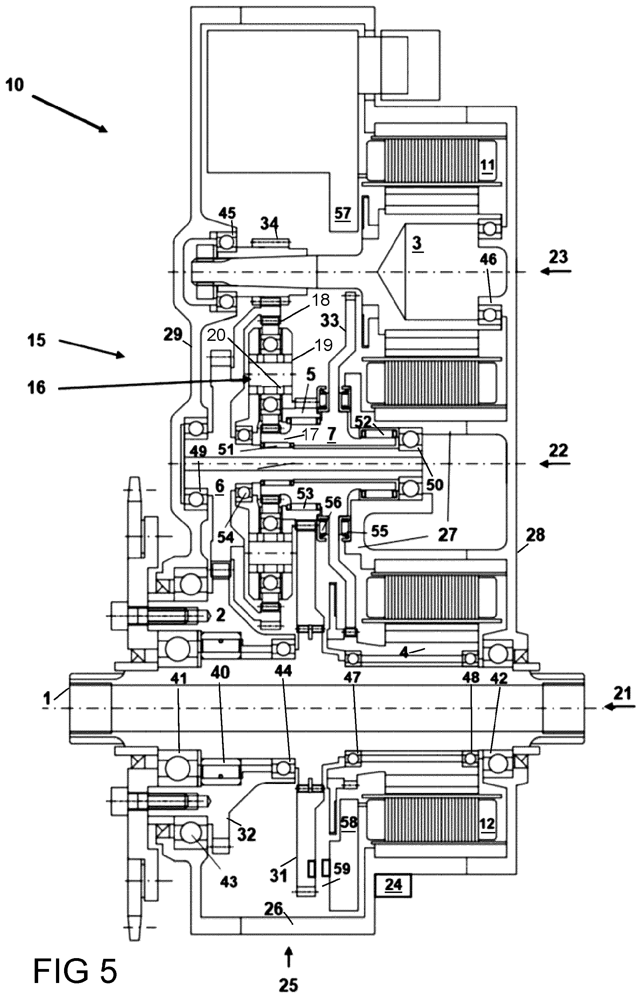

Die Figuren 4 und 5 zeigen eine Getriebestruktur und einen 2D-Konstruktionsentwurf einer aus dem Stand der Technik bekannten Antriebssystems 10 zwischen einer Antriebswelle 1 und einer Abtriebswelle 2 in einem Getriebegehäuse 25 für die Anwendung in einem Elektrofahrrad. Die Antriebswelle 1 geht durch das Getriebegehäuse 25 hindurch und ist auf jeder Seite mit einer Tretkurbel verbunden, über die der Fahrer das Antriebssystem 10 antreibt. Die Abtriebswelle 2 ragt nur auf einer Seite aus dem Getriebegehäuse 25 heraus und ist mit einem Kettenrad oder einer Zahnriemenscheibe verbunden, um von dort aus das Hinterrad des Fahrrades anzutreiben.

Das Antriebssystem 10 weist einen ersten Motor 11 mit einer ersten Rotorwelle 3 auf. Der Motor ist in dieser Anwendung als Elektromotor ausgeführt. Das Antriebssystem 10 hat auch einen zweiten Motor 12 mit einer zweiten Rotorwelle 4. Auch der zweite Motor 12 ist in dieser Anwendung als Elektromotor ausgeführt. Die beiden Elektromotoren 11 und 12 stehen über eine Leistungssteuerung 8 in Verbindung und bilden damit ein stufenloses elektrisches Stellgetriebe. Die Leistungssteuerung 8 steht auch mit einem Energiespeicher 9 in Form einer Batterie in Verbindung. Damit kann die Abtriebswelle 2 über den ersten Elektromotor 11 auch rein elektrisch angetrieben werden. Der Energiespeicher 9 kann dann auch als Bremsenergiespeicher genutzt werden, wenn an der Abtriebswelle 2 Bremsleistung ins Antriebssystem 10 fließt.

Die Antriebswelle 1, die Abtriebswelle 2 und die beiden Rotorwellen 3 und 4 sind über ein mehrstufiges Überlagerungsgetriebe 15 gekoppelt, das mehrere Getriebestufen mit einem Freiheitsgrad 1 und mindestens eine Planetenradstufe 16 mit einem Freiheitsgrad 2 aufweist. Die Getriebestufen sind hier als Stirnradstufen ausgeführt. Es sind aber auch Zahnriemen-Getriebestufen denkbar. Die dreiwellige Planetenradstufe 16 hat ein Sonnenrad 17, ein Hohlrad 18 und einen Planetenträger 19 mit mehreren Planetenrädern 20, die auf Planetenradbolzen gelagert sind.

Die Elemente des Antriebssystems 10 liegen auf drei Wellensträngen 21, 22 und 23 verteilt, die alle parallel zu einander im verfügbaren Bauraum des Getriebegehäuses 25 angeordnet sind.

Die Antriebswelle 1, die Abtriebswelle 2 und die zweite Rotorwelle 4 des zweiten elektrischen Motors 12 sind koaxial auf dem ersten Wellenstrang 21 angeordnet. Die dreiwellige Planetenradstufe 16 des mehrstufigen Überlagerungsgetriebes ist auf dem zweiten Wellenstrang 22 angeordnet. Die erste Rotorwelle 3 des ersten elektrischen Motors 11 ist auf einem dritten Wellenstrang 23 angeordnet.

Auf dem ersten Wellenstrang 21 umschließt die außen liegende Abtriebswelle 2 die innenliegende Antriebswelle 1 auf einer Seite des Getriebegehäuses 25 und die zweite Rotorwelle 4 umschließt die Antriebswelle 1 auf der anderen Seite des Getriebegehäuses 25.

Die Anordnung der dreiwelligen Planetenradstufe 16 auf dem zweiten Wellenstrang ermöglicht die Verwendung eines im Durchmesser kleinen Sonnenradrades 17. Das wiederum ermöglicht eine betragsmäßig große Standübersetzung größer als |-4| bei einem dann noch vertretbar großen Hohlrad 18. Bei einer so großen negativen Standübersetzung werden die einfachen und deshalb schmalen Planetenräder 20 so groß, dass hier ausreichend große schmale Kugellager als Planetenradlager Platz finden. Insgesamt führt das zu einer in axialer Richtung vorteilhaft sehr kurz bauenden Planetenradstufe 16.

Zur kinematischen Kopplung der auf den drei Wellensträngen 21, 22 und 23 verteilten Elemente des Antriebssystems 10 dienen vier als Stirnradstufen ausgeführte Getriebestufen. Die Antriebswelle 1 auf dem ersten Wellenstrang 21 steht über eine erste Stirnradstufe 31 mit einer ersten Koppelwelle 5 auf dem zweiten Wellenstrang 22 in Verbindung. Die Abtriebswelle 2 auf dem ersten Wellenstrang 21 steht über eine zweite Stirnradstufe 32 mit einer zweiten Koppelwelle 6 auf dem zweiten Wellenstrang 22 in Verbindung. Die zweite Rotorwelle 4 des zweiten Elektromotors 12 auf dem ersten Wellenstrang 21 steht über eine dritte Stirnradstufe 33 mit einer dritten Koppelwelle 7 auf dem zweiten Wellenstrang 22 in Verbindung. Diese dritte Koppelwelle trägt auch das Sonnenrad 17. Die erste Rotorwelle 3 des ersten Elektromotors 11 auf dem dritten Wellenstrang 23 steht über eine vierte Stirnradstufe mit dem Hohlrad 18 der Planetenradstufe 16 auf dem zweiten Wellenstrang 22 in Verbindung.

Die erste Stirnradstufe 31 erhöht die Drehzahl der Antriebswelle 1 auf eine ca. dreimal größere Absolutdrehzahl der ersten Koppelwelle 5, die über die Planetenradstufe 16 mit der zweiten Koppelwelle 6 in Verbindung steht. Die Drehzahl der zweiten Koppelwelle 6 wird mit der Übersetzung der zweiten Stirnradstufe 32 auf eine ca. 30% geringere Drehzahl der Abtriebswelle 2 übertragen. Das Verhältnis der Übersetzungen der ersten Stirnradstufe 31 und der zweiten Stirnradstufe 32, jeweils definiert als Verhältnis der Drehzahl des Zahnrades auf dem zweiten Wellenstrang 22 zur Drehzahl des Zahnrades auf dem ersten Wellenstrang 21, definiert die max. Stellkoppelübersetzung zwischen der ersten Koppelwelle 5 und der zweiten Koppelwelle 6. Für einen hohen Wirkungsgradverlauf über der Stellkoppelübersetzung im Stellbereich ist es vorteilhaft, wenn die maximale und die minimale Stellkoppelübersetzung annähernd reziprok sind. Das lässt sich mit so einer Auslegung leicht erreichen.

Auf dem zweiten Wellenstrang 22 ist die erste Koppelwelle 5 mit dem Planetenträger 19, die zweite Koppelwelle 6 mit dem Hohlrad 18 und die dritte Koppelwelle mit dem Sonnenrad 17 der Planetenradstufe 16 verbunden. Da die erste Rotorwelle 3 des ersten Motors 11 mit dem Hohlrad 18 und damit mit der Abtriebswelle 2 verbunden ist, hat die erste Ausführungsvariante eine abtriebsseitige Leistungsverzweigung.

In der Figur 4 sind fünf Anordnungsebenen 35, 36, 37, 38 und 39 markiert, deren Nummern in einer Achsrichtung 30 ansteigen. Die Achsrichtung 30 zeigt von der Stelle, an der die Abtriebswelle 2 aus dem Getriebegehäuse 25 austritt, ins Getriebegehäuse 25 hinein. In der Figur 4 ist erkennbar, dass die zweite Stirnradstufe 32 in der ersten Anordnungsebene 35 liegt und dass die Planetenradstufe 16 und die vierte Stirnradstufe 34 in der zweiten Anordnungsebene 36 liegen, die parallel zur ersten Anordnungsebene 35 in Achsrichtung 30 versetzt liegt, und dass die erste Stirnradstufe 31 in einer dritten Anordnungsebene 37 liegt, die auch in Achsrichtung 30 gegenüber der zweiten Anordnungsebene 36 versetzt liegt, und dass die dritte Stirnradstufe 33 in einer vierten Anordnungsebene 38 liegt, die auch in Achsrichtung 30 gegenüber der dritten Anordnungsebene 37 versetzt liegt, und dass die beiden Motoren 11 und 12 in einer fünften Anordnungsebene 39 liegen, die ebenfalls in Achsrichtung 30 gegenüber der vierten Anordnungsebene 38 versetzt liegt.

Die Planetenradstufe 16 und die vierte Stirnradstufe 34 können in der gleichen zweiten Anordnungsebene 36 liegen, weil das Zahnrad der vierten Stirnradstufe 34 auf dem zweiten Wellenstrang 22 einen größeren Wälzkreisradius hat als das Hohlrad 18 der dreiwelligen Planetenradstufe 16. Dadurch findet das Hohlrad 18 innerhalb dieses Zahnrades der vierten Stirnradstufe 34 in der zweiten Anordnungsebene 36 Platz.

Diese axiale Anordnung der Stirnradstufen 31, 32, 33 und 34 in der Umgebung der Planetenradstufe 16 auf dem zweiten Wellenstrang 22 führt im Zusammenhang mit der dargestellten Aufteilung der Antriebselemente auf die drei Wellenstränge 21, 22 und 23 zu einem äußerst kompakten mehrstufigen Überlagerungsgetriebe 15.

Aus den Figuren 4 und 5 wird außerdem deutlich, dass das Zahnrad der ersten Stirnradstufe 31 auf der ersten Koppelwelle 5 einen größeren Wälzkreisradius hat als das Sonnenrad 17 auf der dritten Koppelwelle 7. Dadurch kann bei der Montage des Antriebssystems 10 das Sonnenrad 17 durch das Zahnrad auf der ersten Koppelwelle 5 hindurch gesteckt werden.

Für die einfache Montage der übrigen Elemente des Antriebssystems 10 und deren Lagerung im Getriebegehäuse 25 weist das Getriebegehäuse 25 vier wesentliche Gehäuseteile auf. Das Getriebegehäuse 25 besteht aus einem Hauptgehäuse 26 mit einen damit verbindbaren oder verbundenen Mittelsteg 27 und einer mit dem Hauptgehäuse 26 verbindbaren oder verbundenen Motorenabdeckung 28 auf der Seite der fünften Anordnungsebene 39 und einer mit dem Hauptgehäuse 26 verbindbaren oder verbundenen Getriebeabdeckung 29 auf der Seite der ersten Anordnungsebene 35, durch die die Abtriebswelle 2 aus dem Getriebegehäuse 25 ragt.

Der in Figur 5 dargestellte Konstruktionsentwurf verdeutlicht mögliche Lagerungen aller Wellen des Antriebssystems 10 im Getriebegehäuse 25 oder auf anderen Wellen. Dabei ist es das Ziel statisch bestimmte Lagerungen mit großem Lagerabstand und kleinen Lagergrößen zu realisieren. Dies sind gute Voraussetzungen für einen geräuscharmen und verlustarmen Lauf aller Wellen.

Auf dem ersten Wellenstrang 21 ist die Antriebswelle 1 über ein erstes Lager 41 in der Abtriebswelle 2 und über ein zweites Lager 42 in der Motorenabdeckung 28 abstützt. Die Antriebswelle 1 ragt an beiden Seiten aus dem Getriebegehäuse 25 heraus und erfährt aus dem Antrieb große radiale Belastungen. Die Lager 41 und 42 haben einen maximal großen Abstand für eine optimale Lagerung der Antriebswelle 1. Die Abtriebswelle 2 ist über ein drittes Lager 43 in der Getriebeabdeckung 29 und über ein viertes Lager 44 auf der Antriebswelle abgestützt. Die Lager 41 und 43 liegen annähernd radial umeinander, sodass die radiale Lagerlast von Lager 41 direkt über Lager 43 im Getriebegehäuse 25 abgestützt wird.

Die erste Rotorwelle 3 stützt sich über ein fünftes Lager 45 in der Getriebeabdeckung 29 und über ein sechstes Lager 46 in der Motorenabdeckung 28 ab. Das Lager 46 lässt sich aber auch mit ähnlich guter Funktion zwischen dem Mittelsteg 27 und der Rotorwelle 3 platzieren.

Die zweite Rotorwelle 4 ist über ein siebtes Lager 47 und ein achtes Lager 48 auf der Antriebswelle 1 gelagert. Das Lager 47 kann aber auch zwischen Rotorwelle 4 und Mittelsteg 27 sitzen, hat dann aber einen größeren Durchmesser. Das Lager 48 könnte auch zwischen Rotorwelle 4 und Motorenabdeckung 28 sitzen, was aber auch mehr axialen und radialen Bauraum erfordern würde.

Auf dem zweiten Wellenstrang 22 sind mehrere Wellen ineinander, aber letztendlich im Getriebegehäuse 25 gelagert. Die zweite Koppelwelle 6 ist die auf dem zweiten Wellenstrang 22 höchst belastete Welle und ist deshalb als innerste Welle ausgeführt, die über ein neuntes Lager 49 in der Getriebeabdeckung 29 und über ein zehntes Lager 50 im Mittelsteg 27 gelagert ist. Dadurch ergibt sich ein vorteilhaft großer Lagerabstand. Alternativ kann das Lager 50 auch im Motorendeckel 28 sitzen.

Die dritte Koppelwelle 7 ist über ein elftes Lager 51 auf der zweiten Koppelwelle 6 und über ein zwölftes Lager 52 im Mittelsteg 27 abgestützt. Die erste Koppelwelle 5 stützt sich über ein dreizehntes Lager 53 auf der dritten Koppelwelle 7 und über ein vierzehntes Lager 54 auf der zweiten Koppelwelle 6 ab. Ein fünfzehntes Lager 55 überträgt zudem axiale Kräfte zwischen der dritten Koppelwelle 7 und dem Mittelsteg 27 und ein sechzehntes Lager 56 überträgt axiale Kräfte zwischen der ersten Koppelwelle 5 und der dritten Koppelwelle 7.

In der ersten Anordnungsebene 35 mit der zweiten Stirnradstufe 32 befindet sich ein Freilauf 40 zwischen der Antriebswelle 1 und der Abtriebswelle 2. Dies ist vorzugs- weise ein Klemmkörperfreilauf, weil diese Bauform eines Freilaufs eine hohe Drehmomentkapazität aufweist und gehärtete zylindrische Oberflächen der zu koppelnden Wellen mitbenutzen kann. In der konstruktiven Ausgestaltung nach Figur 5 hat der Freilauf aber einen eigenen Innenring und einen eigenen Außenring.

Wenn die Regelung in der Leistungssteuerung 8 das maximale Drehmoment des zweiten Motors 12 begrenzt, beschleunigt ein zu großes, nicht mehr über den zweiten Motor 12 abstützbares Antriebsdrehmoment die Antriebswelle 1 so weit, bis der Freilauf 40 die Antriebswelle 1 mit der Abtriebswelle 2 automatisch kraftschlüssig koppelt. Der Freilauf 40 dient damit zum einen als Überlastschutz des Antriebssystems und zum anderen garantiert er eine mechanische Grundfunktion des Antriebs bei Problemen im elektrischen System, zum Beispiel bei einem Spannungsabfall, oder bei Problemen in der Steuerung/Regelung, zum Beispiel beim Ausfall von Sensoren.

Für eine präzise und zuverlässige Regelung des Antriebssystems mit hohem Antriebskomfort benötigt die Steuerung in kurzen Taktzeiten präzise Signale. An und auf der ersten Rotorwelle 3 sitzt dazu ein erster Resolver 57 mit Sensor und Geberrad für die exakte Messung der Winkelposition und der Drehzahl. An und auf der zweiten Rotorwelle 4 sitzt ein zweiter Resolver 58. Ein einfaches Drehzahlmesssystem 59 misst darüber hinaus die Drehzahl der Antriebswelle 1. Die hochpräzisen Resolver 57 und 58 sind Voraussetzungen für eine genaue Drehzahl- und/oder Drehmomentregelung an den beiden Motoren 11 und 12. Das zusätzliche und optionale Drehzahlmesssystem 58 an und auf der Antriebswelle ermöglicht eine gewisse Redundanz für eine höhere Systemsicherheit. Es kann zum Beispiel zur Plausibilitätsprüfung der Resolversignale dienen und ermöglicht eine funktionsreduzierte Notfunktion bei Ausfall eines Resolvers.

Am Getriebegehäuse 25 ist in der Figur 5 noch ein Beschleunigungs- und Neigungssensor 24 verbaut, wie er heute zum Beispiel in vielen Smartphones benutzt wird. Aus den Beschleunigungs- und Neigungssignalen lässt sich in Verbindung mit der Kenntnis der übertragenen Leistung auf das Systemgewicht und die Dynamik des Antriebsdrehmomentes schließen. Diese Information kann in der Leistungssteuerung für eine schnellere und komfortablere Regelung genutzt werden.

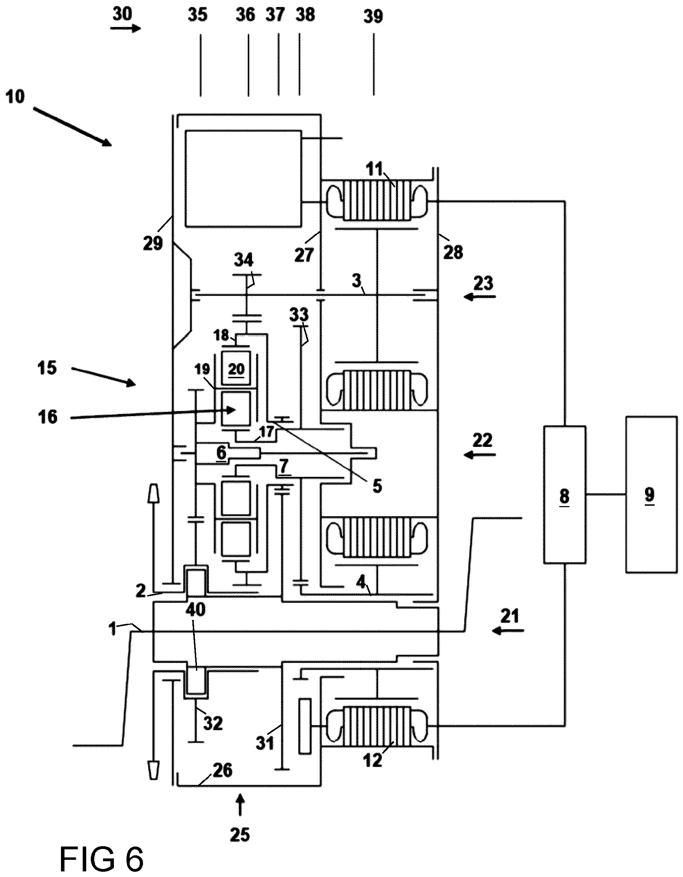

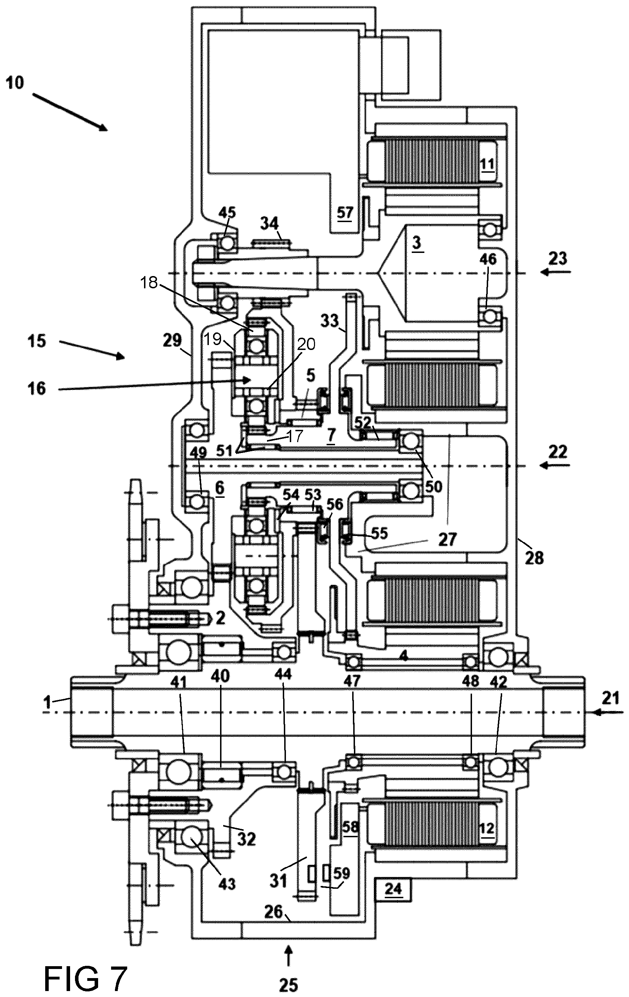

Die Figuren 6 und 7 zeigen eine Getriebestruktur und einen 2D-Konstruktionsentwurf eines weiteren aus dem Stand der Technik bekannten Antriebssystems 10 zwischen der Antriebswelle 1 und der Abtriebswelle 2 in einem Getriebegehäuse 25 für die Anwendung in einem Elektrofahrrad.

In der ersten Ausführungsvariante ist die erste Koppelwelle 5 mit dem Planetenträger 9 und die zweite Koppelwelle 6 mit dem Hohlrad 18 der Planetenradstufe 20 verbunden. In der zweiten Ausführungsvariante ist die erste Koppelwelle 5 mit dem Hohlrad 18 und die zweite Koppelwelle 6 mit dem Planetenträger der Planetenradstufe 20 verbunden. Das sind die einzigen strukturellen Unterschiede zwischen den beiden Ausführungsvarianten.

Da der erste Rotor 3 des ersten Motors 11 in beiden Ausführungsvarianten über die vierte Stirnradstufe 34 mit dem Hohlrad 18 in Verbindung steht (Übersetzung im Bereich von |-8|), sind in der ersten Ausführungsvariante die Drehzahlen der Abtriebswelle 2 und der ersten Rotorwelle 3 proportional. In der zweiten Ausführungsvariante sind die Drehzahlen der Antriebswelle 1 und der ersten Rotorwelle 3 proportional. Beide Varianten sind technisch sinnvoll. In einem elektrisch unterstützten Fahrradantrieb ist die erste Ausführungsvariante umso vorteilhafter, je höher die elektrische Unterstützung ist, weil die elektrische Unterstützungsleistung dann auf direkterem Weg von dem Energiespeicher 9 hauptsächlich über den ersten Motor 11 auf das angetriebene Rad wirkt.

Bei den Ausführungsvarianten der Figuren 4 bis 7 ist über den Freilauf 40 ein Notlaufbetrieb ermöglicht, über den das Antriebssystem 10 auch bei entnommenem, defektem oder leerem Energiespeicher 9 weiterhin funktionsfähig bleibt. In diesem Notlaufbetrieb ist jedoch nur eine feste Übersetzung vorgesehen, die der kleinsten Übersetzung im Normalbetrieb entspricht. Mithin lassen sich im Notlaufbetrieb - trotz hoher Trittfrequenz an der Antriebswelle 1 - nur noch vergleichsweise geringe Geschwindigkeiten realisieren.

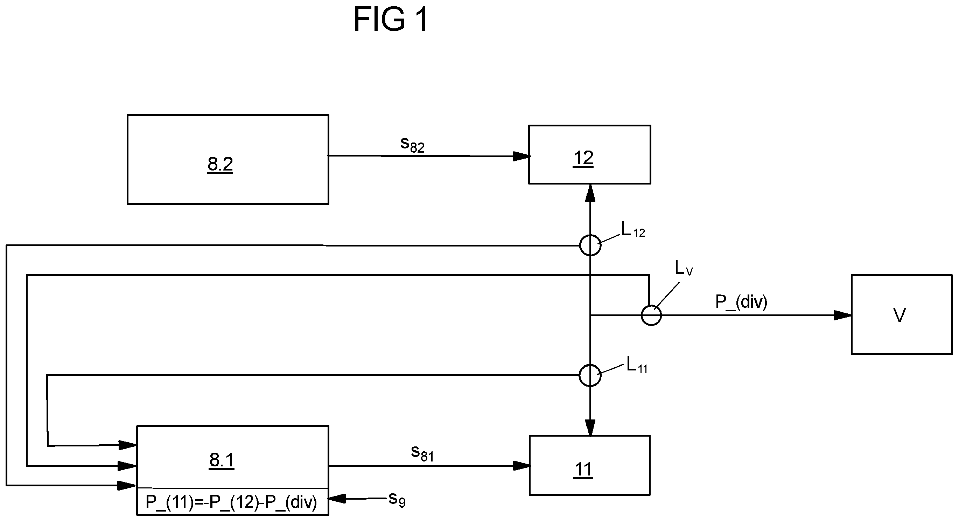

In dieser Hinsicht schafft die vorgeschlagene Lösung Abhilfe, zu der mögliche Ausführungsvarianten anhand der Figuren 1, 2 und 3 veranschaulicht sind.

Diese Ausführungsvarianten zielen auf die Bereitstellung einer Steuerelektronik 8.1, 8.2 für eine Leistungssteuerung für erste und zweite Elektromotoren in einem Notlaufbetrieb eines Antriebssystems, bei dem mithilfe der Elektromotoren ein Überlagerungsgetriebe zu einer stufenlosen Variation eines Übersetzungsverhältnisses steuerbar ist. Die Ausführungsvarianten der Figuren 1, 2 und 3 sind somit insbesondere für eine Leistungssteuerung der ersten und zweiten Elektromotoren 11 und 12 in einem Antriebssystem 10 einer Ausführungsvariante der Figuren 4 bis 7 einsetzbar und werden nachfolgend unter Bezugnahme auf die Ausführungsvarianten der Figuren 4 bis 7 erläutert.

Die Steuerelektronik 8.1, 8.2 der Figuren 1, 2 und 3 wird jeweils durch zwei Steuerelektronikteile 8.1 und 8.2 repräsentiert, über die jeweils Steuersignale an einen der Elektromotoren 11 und 12 übertragen werden. Gemeinsam ist allen Ausführungsvariante der Figuren 1, 2 und 3, dass über die Steuerelektronik 8.1, 8.2 mindestens eine der Elektromotoren, hier beispielhaft der erste Elektromotor 11, in einem Notlaufbetrieb wenigstens temporär generatorisch betrieben wird, um eine an der Antriebswelle 1 muskelkraftbetätigt aufgebrachte mechanische Leistung in elektrische Energie umzuwandeln, mit der weiterhin eine stufenlose Variation des Übersetzungsverhältnisses des Überlagerungsgetriebes 15 auch im Notlaufbetrieb ermöglicht wird. Die in den Figuren separiert dargestellten Steuerelektronikteilen 8.1, 8.2 können selbstverständlich Teil eines einheitlichen Mikrocontrollers sein und sind in den Figuren lediglich zur zeichnerischen Vereinfachung getrennt dargestellt.

Bei der Ausführungsvariante der Figur 1 ist die Steuerelektronik 8.1, 8.2 (an dem Steuerelektronikteil 8.1) mit dem ersten Elektromotor 11 gekoppelt und wertet ein Energiespeichersignal s₉ aus, das - gegebenenfalls auch durch seine Abwesenheit - anzeigt, ob der Energiespeicher 9 des Antriebssystems 10 ordnungsgemäß funktioniert. Unter dem Energiespeichersignal s₉ wird vorliegend ein externes oder systeminternes Signal verstanden und somit auch ein Signal, das ein Unterspannungsereignis signalisiert, also das Auftreten einer zu (im Vergleich zu einem hinterlegten Referenzwert) zu niedrigen Spannungswert im System. Grundsätzlich kann dabei für den Wechsel in den Notlaufbetrieb ein einzelner, bestimmter Wert des Energiespeichersignals oder aber ein bestimmter Verlauf des Energiespeichersignals über der Zeit entscheidend sein. Beispielsweise wird über das Energiespeichersignal s₉ signalisiert, ob der Energiespeicher 9 und mithin eine Batterie des Antriebssystems 10 entfernt wurde, defekt oder leer ist. Ist dies der Fall, schaltet die Steuerelektronik 8.1, 8.2 das Antriebssystem 10 in einen Notlaufbetrieb und mithin in einen anderen Betriebsmodus, in dem insbesondere der erste Elektromotor 11 abweichend zu einem Normalbetrieb betrieben wird.

So wird der zweite Elektromotor 12 über ein Steuersignal s₈₂ des Steuerelektronikteils 8.2 wie im Normalbetrieb angesteuert, um weiterhin stufenlos das Übersetzungsverhältnis des Überlagerungsgetriebes 15 in Abhängigkeit von einer an das Rad des Elektrofahrrades abzugebenden Leistung zu variieren und dementsprechend eine Trittfrequenz an der Antriebswelle 1 auch für eine deutlich höhere Fahrgeschwindigkeit moderat zu halten. Der erste Elektromotor 11 wird demgegenüber in dem Notlaufbetrieb über ein Steuersignal s₈₁ so angesteuert, dass eine elektrische Energiebilanz zu Null geregelt wird. Hierfür erfolgt eine Leistungsermittlung L₁₁, L₁₂ und L_{V} innerhalb des Antriebssystems 10. Hier werden entsprechende Messsignale abgegriffen, um eine über dem zweiten Elektromotor 12 abfallende Leistung (Leistungsermittlung L₁₂), eine über wenigstens einen Verbraucher V abfallende Leistung (Leistungsermittlung L_{V}) und die Leistung des ersten Elektromotors 11 (Leistungsermittlung L11) über Messsignale zu erfassen, die an die Steuerelektronik respektive deren Steuerelektrotechnikteil 8.1 übertragen werden.

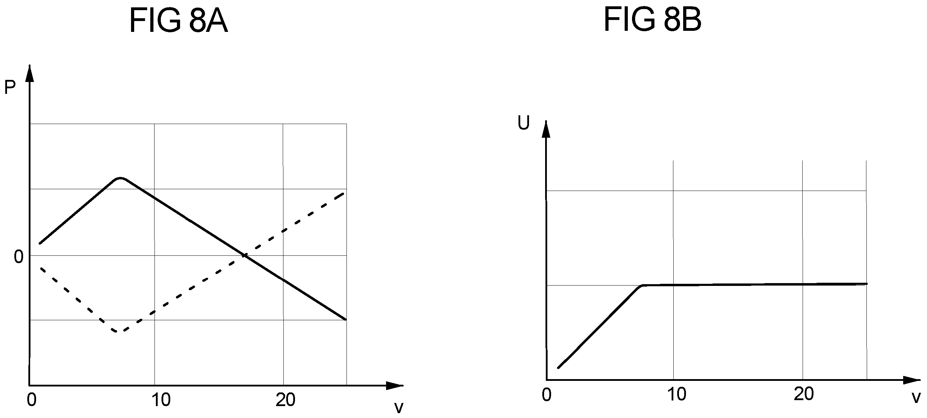

Die an dem zweiten Elektromotor 12 abfallende Leistung ist dabei in der Figur 1 mit P_(12) angegeben, während die über den Verbraucher V abfallende Leistung mit P_(div) angegeben ist. Über die mithilfe der Steuerelektronik 8.1, 8.2 bereitgestellte Regelung wird nun die für den ersten Elektromotor 11 zur Verfügung zu stellende Leistung mit P_(11) mit P_(11)=-P_(12)-P_(div) berechnet. In Abhängigkeit von der ermittelten Energiebilanz und insbesondere der durch den ersten Elektromotor 11 aufzubringenden Leistung P_(11) generiert die Steuerelektronik 8.1, 8.2 an dem Steuerelektronikteil 8.1 das passende Steuersignal s₈₁ für den ersten Elektromotor 11, um diesen entsprechend anzusteuern. In der Regel (in Abhängigkeit von Wunschkadenz, Fahrgeschwindigkeit und Systemauslegung) arbeitet somit der Elektromotor 11 generatorisch, während der zweite Elektromotor 12 motorisch betrieben wird. Dies ist beispielhaft anhand der Diagramme Figuren 8A und 8B in Abhängigkeit von einer mit dem Antriebssystem 10 erzielten Geschwindigkeit des Elektrofahrrads näher veranschaulicht. So zeigt das Diagramm der Figur 8A die Leistung P der beiden Elektromotoren 11 und 12 über der Geschwindigkeit v, während das Diagramm der Figur 8B die durch den Fahrer des Elektrofahrrads zu bewirkende Drehzahl U der Antriebswelle 1 in Abhängigkeit von der Geschwindigkeit v zeigt. Hieraus ist ersichtlich, das beide Elektromotoren 11 und 12 je nach Fahrsituation generatorisch oder motorisch betrieben werden, insbesondere um bei gewünschter höherer (Fahr-)Geschwindigkeit v die Umdrehung der Antriebswelle 1 für den Fahrer konstant halten zu können.

Es können aber auch im Laufe des Notlaufbetriebs Situationen auftreten, in denen sowohl der erste Elektromotor 11 als auch der zweite Elektromotor 12 motorisch oder generatorisch betrieben werden, beispielsweise aufgrund einer an dem wenigstens einen Verbraucher abfallenden höheren Leistung P_(div). So kann der Verbraucher V beispielsweise für eine an dem Elektrofahrrad notwendigerweise zu versorgende Beleuchtung stehen.

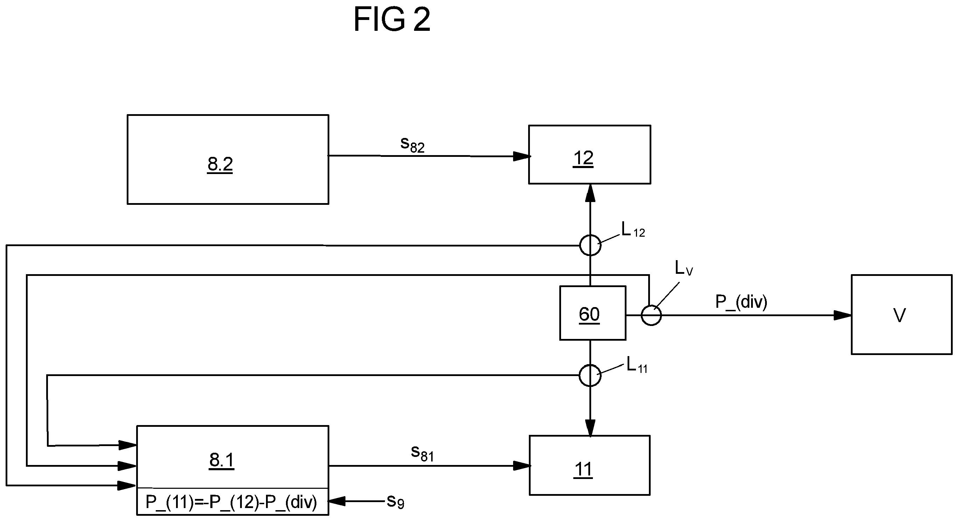

Bei der Ausführungsvariante der Figur 2 ist die Steuerelektronik 8.1, 8.2 mit einem Energiepuffer 60 gekoppelt. Dieser Energiepuffer 60, z.B. gebildet durch mindestens einen Zwischenkreiskondensator, ein Schwungrad, eine Magnetfeldanordnung oder einen hydraulischen Druckspeicher, puffert Ladung respektive Energie und stellt einen Zwischenkreis zur Verfügung. Über den Energiepuffer 60 lassen sich Verlustleistungen besser ausregeln und der Notlaufbetrieb stabiler steuern. Die Steuerelektronik 8.1, 8.2 mit der in dem Steuerelektronikteil 8.1 vorgesehenen Auswertelogik ist dann zum Beispiel bestrebt, die Energiebilanz im Notlaufbetrieb möglichst auf einem konstanten Wert zu halten.

In einer Ausführungsvariante mit einem Zwischenkreiskondensator ist die Steuerelektronik 8.1, 8.2 mit der in dem Steuerelektronikteil 8.1 vorgesehenen Auswertelogik zum Beispiel bestrebt, eine Zwischenkreisspannung im Notlaufbetrieb möglichst auf einem konstanten Wert zu halten. Hier wird zwar ebenfalls der erste Elektromotor 11 weiterhin energiebilanzabhängig betrieben. D.h., über die Leistungsermittlungen L₁₂, L_{V} und L₁₁ wird der erste Elektromotor 11 mithilfe des Steuersignals s₈₁ insbesondere derart angesteuert, dass die Energiebilanz zu Null geregelt wird.

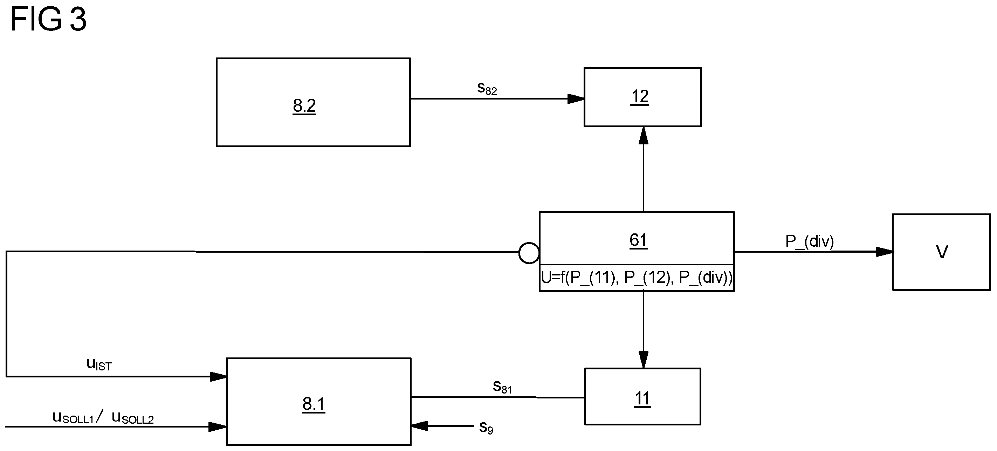

Bei der Weiterbildung der Figur 3 ist ein Zwischenkreiskondensator 61 als Energiepuffer mit einem zusätzlichen Messabgriff für die Bereitstellung eines Messsignals u_{IST} an der Steuerelektronik 8.1, 8.2 vorgesehen. Derart erfolgt bei der Ausführungsvariante der Figur 3 im Notlaufbetrieb eine Regelung des ersten Elektromotors 11 in Abhängigkeit von einer gemessenen Zwischenkreisspannung innerhalb des Antriebssystems 10, die durch das Messsignal u_{IST} repräsentiert und dem Steuerelektronikteil 8.1 zur Verfügung gestellt wird. Das für die Zwischenkreisspannung repräsentative Messsignal u_{IST} respektive eine hieraus ermittelter Ist-Spannungswert kann dann innerhalb der Steuerelektronik 8.1, 8.2 einem Soll-Spannungswert gegenübergestellt werden, um den ersten Elektromotor 11 derart anzusteuern, dass der Ist-Spannungswert dem Soll-Spannungswert entspricht oder zumindest in diesem angenähert wird.

Innerhalb der Steuerelektronik kann ein einzelner und somit genau ein Soll-Spannungswert vorgesehen sein. Es ist jedoch auch möglich, dass zwei unterschiedliche Soll-Spannungswerte vorgesehen sind, die sich um einen Toleranzbereich voneinander unterscheiden. Die unterschiedlichen Soll-Spannungswerte werden in dem Ausführungsbeispiel der Figur 3 dem Steuerelektronikteil 8.1 über Signale u_{SOLL1} und u_{SOLL2} zur Verfügung gestellt.

Die in der Figur 3 dargestellte Regelung zielt darauf ab, die Zwischenkreisspannung und damit die in dem Antriebssystem 10 vorhandene elektrische Energie auf einem konstanten Wert zu halten. Sinkt beispielsweise die über die Messstelle des wenigstens einen Zwischenkreiskondensators 61 gemessene Zwischenkreisspannung unter einen Sollwert, zum Beispiel u_{SOLL1}, ab, so wird über die Steuerchronik 8.1, 8.2 der erste Elektromotor 11 stärker in Richtung eines generatorischen Betriebs gefahren, um dem Antriebssystem 10 mehr Energie zuzuführen (wenn der erste Elektromotor 11 bereits generatorisch betrieben wird) respektive weniger Energie zu entnehmen (wenn der erste Elektromotor aktuell motorisch betrieben wird). Steigt demgegenüber die Zwischenkreisspannung über einen Sollwert, beispielsweise den Sollwert u_{SOLL2}, so wird der ersten Elektromotor 11 stärker in Richtung eines motorischen Betriebs gefahren, um dem Antriebssystem 10 weniger Energie zuzuführen (wenn der erste Elektromotor 11 aktuell generatorisch betrieben wird) bzw. mehr Energie zu entnehmen (wenn der erste Elektromotor 11 aktuell bereits motorisch betrieben wird). Bei einer Leistungsregelung über eine Zwischenkreisspannung lassen sich Verlustleistungen automatisch ausregeln und das Antriebssystem 11 kann mit kleineren Energiepuffern und damit beispielsweise kleineren Zwischenkreiskondensatoren 61 (als bei der Ausführungsvariante der Figur 2) betrieben werden.

Mit der vorgeschlagenen Lösung wird ein Antriebssystem 10 bereitgestellt, das auch ohne externe Energiezufuhr und damit auch ohne (funktionstüchtigen) Energiespeicher 9 in einem Notlaufbetrieb eine stufenlose Automatik-Getriebe-Funktion über ein Überlagerungsgetriebe 15 zur Verfügung stellen kann. In diesem Notlaufbetrieb kann somit weiterhin eine vergleichsweise hohe Fahrgeschwindigkeit auch mit moderater Trittfrequenz erreicht werden, insbesondere eine höhere Fahrgeschwindigkeit als dies bei einer aus dem Stand der Technik bekannten Lösung allein mit einem Freilauf 40 möglich wäre, wie er in den Ausführungsvarianten der Figuren 4 bis 7 dargestellt ist.

### Bezugszeichenliste

- 1: Antriebswelle
- 2: Abtriebswelle
- 3: erste Rotorwelle
- 4: zweite Rotorwelle
- 5: erste Koppelwelle
- 6: zweite Koppelwelle
- 7: dritte Koppelwelle
- 8: Leistungssteuerung
- 8.1: Steuerelektronikteil für ersten Elektromotor
- 9: Energiespeicher
- 10: Antriebssystem
- 8.2: Steuerelektronikteil für zweiten Elektromotor
- 11: erster Elektromotor
- 12: zweiter Elektromotor
- 15: Überlagerungsgetriebe
- 16: dreiwellige Planetenradstufe PG
- 17: Sonnenrad
- 18: Hohlrad
- 19: Planetenträger
- 20: Planetenräder
- 21: erster Wellenstrang
- 22: zweiter Wellenstrang
- 23: dritter Wellenstrang
- 24: Beschleunigungs- und Neigungssensor
- 25: Getriebegehäuse
- 26: Hauptgehäuse
- 27: Mittelsteg
- 28: Motorenabdeckung
- 29: Getriebeabdeckung
- 30: Achsrichtung
- 31: erste Stirnradstufe
- 32: zweite Stirnradstufe
- 33: dritte Stirnradstufe
- 34: vierte Stirnradstufe
- 35: erste Anordnungsebene
- 36: zweite Anordnungsebene
- 37: dritte Anordnungsebene
- 38: vierte Anordnungsebene
- 39: fünfte Anordnungsebene
- 40: Freilauf
- 41-56: Lager
- 57: erster Resolver mit Sensor und Geberrad
- 58: zweiter Resolver mit Sensor und Geberrad
- 59: Drehzahlmesssystem
- 60: Energiepuffer
- 61: Zwischenkreiskondensator
- L₁₁, L₁₂, L_{V}: Leistungsermittlung
- s₈₁, s₈₂: Steuersignal
- s₉: Energiespeichersignal
- u_{IST}: Messsignal
- u_{SOLL1}, u_{SOLL2}: Sollsignal
- V: Verbraucher

## Patentansprüche

1. Antriebssystem für ein Elektrofahrrad, mit
- einer Antriebswelle (1),
- einer Abtriebswelle (2) zum Antreiben eines Rades des Elektrofahrrads,
- einem ersten Elektromotor (11), der eine erste Rotorwelle (3) antreibt,
- einem zweiten Elektromotor (12), der eine zweite Rotorwelle (4) antreibt,
- einem Überlagerungsgetriebe (15), dessen Übersetzungsverhältnis mithilfe der ersten und zweiten Elektromotoren (11, 12) stufenlos einstellbar ist und über das die Antriebswelle (1) und die Abtriebswelle (2) miteinander gekoppelt sind, wobei ein von dem ersten Elektromotor (11) erzeugtes Drehmoment zumindest teilweise an die Abtriebswelle (2) übertragbar ist, und
- einem Energiespeicher (9) für die Versorgung der ersten und zweiten Elektromotoren (11, 12) mit elektrischem Strom,
wobei das Antriebssystem (10) eine Steuerelektronik (8.1, 8.2) umfasst, die für eine Leistungssteuerung der ersten und zweiten Elektromotoren (11, 12) in einem Notlaufbetrieb des Antriebssystems (10) eingerichtet ist, wobei
- der Notlaufbetrieb aktiv ist, wenn die ersten und zweiten Elektromotoren (11, 12) über den Energiespeicher (9) nicht mit elektrischem Strom versorgt werden können, **dadurch gekennzeichnet , dass**
- die Steuerelektronik (8.1, 8.2) eingerichtet ist, mindestens einen der ersten und zweiten Elektromotoren (11, 12) in dem Notlaufbetrieb wenigstens temporär generatorisch zu betreiben, um eine an der Antriebswelle (1) muskelkraftbetätigt aufgebrachte Leistung in elektrische Energie umzuwandeln, mit der eine stufenlose Variation des Übersetzungsverhältnisses des Überlagerungsgetriebes (15) auch im Notlaufbetrieb ermöglicht wird und durch die Steuerelektronik (8.1, 8.2) steuerbar ist.

2. Antriebssystem nach Anspruch 1, **dadurch gekennzeichnet, dass** die Steuerelektronik (8.1, 8.2) für die Leistungssteuerung der ersten und zweiten Elektromotoren (11, 12) im Notlaufbetrieb eingerichtet ist, einen der Elektromotoren (11, 12) mit dem Ziel anzusteuern, eine elektrische Energiebilanz innerhalb des Antriebssystems (10) zu Null zu regeln.

3. Antriebssystem nach Anspruch 2, **dadurch gekennzeichnet, dass** die Steuerelektronik (8.1, 8.2) für die Leistungssteuerung der ersten und zweiten Elektromotoren (11, 12) im Notlaufbetrieb eingerichtet ist,
- den zweiten Elektromotor (12) entsprechend einem Normalbetrieb, bei dem über den Energiespeicher (9) die Versorgung der ersten und zweiten Elektromotoren (11, 12) mit elektrischem Strom erfolgt, anzusteuern und
- den ersten Elektromotor (11) mit dem Ziel anzusteuern, eine elektrische Energiebilanz innerhalb des Antriebssystems (10) zu Null zu regeln.

4. Antriebssystem nach Anspruch 2 oder 3, **dadurch gekennzeichnet, dass** die Steuerelektronik (8.1, 8.2) für die Leistungssteuerung der ersten und zweiten Elektromotoren (11, 12) im Notlaufbetrieb eingerichtet ist, für die Regelung des einen Elektromotors (11) eine Leistungsaufnahme wenigstens eines über das Antriebssystem (10) mit elektrischer Energie versorgten Verbrauchers (V) und/oder eine Verlustleistung zu berücksichtigen.

5. Antriebssystem nach einem der vorhergehenden Ansprüche, **dadurch gekennzeichnet, dass** das Antriebssystem (10) mindestens einen mit der Steuerelektronik (8.1, 8.2) verbundenen Energiepuffer (60, 61) umfasst.

6. Antriebssystem nach Anspruch 5, **dadurch gekennzeichnet, dass** die Steuerelektronik (8.1, 8.2) für die Leistungssteuerung der ersten und zweiten Elektromotoren (11, 12) im Notlaufbetrieb eingerichtet ist, einen der Elektromotoren (11, 12) mit dem Ziel anzusteuern, eine über den Energiepuffer (61) bereitgestellte Zwischenkreisspannung auf einem bestimmten Spannungswert zu halten.

7. Antriebssystem nach Anspruch 6, **dadurch gekennzeichnet, dass** die Steuerelektronik (8.1, 8.2) zur Verarbeitung eines Messsignals (u_{IST}) eingerichtet ist, das für die aktuelle Zwischenkreisspannung des Antriebssystems (10) repräsentativ ist.

8. Antriebssystem nach Anspruch 7, **dadurch gekennzeichnet, dass** die Steuerelektronik (8.1, 8.2) eingerichtet ist, einen auf Basis des Messsignals (u_{IST}) erfassten Ist-Spannungswert mit wenigstens einem Soll-Spannungswert (u_{SOLL1}, u_{SOLL2}) zu vergleichen.

9. Antriebssystem nach Anspruch 3 und nach Anspruch 8, **dadurch gekennzeichnet, dass** die Steuerelektronik (8.1, 8.2) eingerichtet ist, den ersten Elektromotor (11) in Abhängigkeit von dem für die aktuelle Zwischenkreisspannung repräsentativen Messsignal (u_{IST}) anzusteuern, und zwar derart, dass, wenn der Ist-Spannungswert unter einen ersten Soll-Spannungswert (u_{SOLL1}) abfällt,
- der erste Elektromotor (11) zu einer höheren Stromerzeugung angesteuert wird, wenn der erste Elektromotor (11) aktuell generatorisch betrieben wird, oder
- der erste Elektromotor (11) zu einer niedrigeren Leistungsaufnahme angesteuert wird, wenn der erste Elektromotor (11) aktuell motorisch betrieben wird.

10. Antriebssystem nach Anspruch 3 und nach Anspruch 8 oder 9, **dadurch gekennzeichnet, dass** die Steuerelektronik (8.1, 8.2) eingerichtet ist, den ersten Elektromotor (11) in Abhängigkeit von dem für die aktuelle Zwischenkreisspannung repräsentativen Messsignal (u_{IST}) anzusteuern, und zwar derart, dass, wenn der Ist-Spannungswert über einen zweiten Soll-Spannungswert (u_{SOLL2}) ansteigt,
- der erste Elektromotor (11) zu einer niedrigeren Stromerzeugung angesteuert wird, wenn der erste Elektromotor (11) aktuell generatorisch betrieben wird, oder
- der erste Elektromotor (11) zu einer höheren Leistungsaufnahme angesteuert wird, wenn der erste Elektromotor (11) aktuell motorisch betrieben wird.

11. Elektrofahrrad mit einem Antriebssystem nach einem der Ansprüche 1 bis 10.

12. Verfahren zur Steuerung eines Antriebssystems (10) für ein Elektrofahrrad, wobei das Antriebssystem (10) Folgendes umfasst:
- eine Antriebswelle (1),
- eine Abtriebswelle (2) zum Antreiben eines Rades des Elektrofahrrads,
- einen ersten Elektromotor (11), der eine erste Rotorwelle (3) antreibt,
- einen zweiten Elektromotor (12), der eine zweite Rotorwelle (4) antreibt,
- ein Überlagerungsgetriebe (15), dessen Übersetzungsverhältnis mithilfe der ersten und zweiten Elektromotoren (11, 12) stufenlos einstellbar ist und über das die Antriebswelle (1) und die Abtriebswelle (2) miteinander gekoppelt sind, wobei ein von dem ersten Elektromotor (11) erzeugtes Drehmoment zumindest teilweise an die Abtriebswelle (2) übertragbar ist, und
- einem Energiespeicher (9) für die Versorgung der ersten und zweiten Elektromotoren (11, 12) mit elektrischem Strom,
wobei das Antriebssystem (10) in einem Notlaufbetrieb betrieben wird, wenn die ersten und zweiten Elektromotoren (11, 12) über den Energiespeicher (9) nicht mit elektrischem Strom versorgt werden können, **dadurch gekennzeichnet, dass** in dem Notlaufbetrieb mindestens einer der ersten und zweiten Elektromotoren (11, 12) wenigstens temporär generatorisch betrieben wird, um eine an der Antriebswelle (1) muskelkraftbetätigt aufgebrachte Leistung in elektrische Energie umzuwandeln, mit der eine stufenlose Variation des Übersetzungsverhältnisses des Überlagerungsgetriebes (15) auch im Notlaufbetrieb ermöglicht und gesteuert wird.

13. Verfahren nach Anspruch 12, **dadurch gekennzeichnet, dass** in dem Notlaufbetrieb
- der zweite Elektromotor (12) entsprechend einem Normalbetrieb, bei dem über den Energiespeicher (9) die Versorgung der ersten und zweiten Elektromotoren (11, 12) mit elektrischem Strom erfolgt, angesteuert wird und
- der erste Elektromotor (11) mit dem Ziel angesteuert wird, eine elektrische Energiebilanz innerhalb des Antriebssystems (10) zu Null zu regeln.

14. Verfahren nach Anspruch 12 oder 13, **dadurch gekennzeichnet, dass** das Antriebssystem (10) mindestens einen Energiepuffer (60, 61) zur Erzeugung einer Zwischenkreisspannung in dem Notlaufbetrieb für die Versorgung wenigstens eines der Elektromotoren (11,12) mit elektrischem Strom umfasst und einer der Elektromotoren (11, 12) mit dem Ziel angesteuert wird, die Zwischenkreisspannung auf einem bestimmten Spannungswert zu halten.

15. Computerprogrammprodukt, aufweisend Anweisungen, die bei einer Ausführung durch mindestens einen Prozessor einer Steuerelektronik (8.1, 8.2) für ein Antriebssystem (10) eines Elektrofahrrads, den mindestens einen Prozessor veranlassen, ein Verfahren nach einem der Ansprüche 12 bis 14 auszuführen.

## Claims

1. Drive system for an electric bicycle, having
- a drive shaft (1),
- an output shaft (2) for driving a wheel of the electric bicycle,
- a first electric motor (11) which drives a first rotor shaft (3),
- a second electric motor (12) which drives a second rotor shaft (4),
- an overriding gear (15), the gear ratio of which is infinitely adjustable with the aid of the first and second electric motors (11, 12) and by way of which the drive shaft (1) and the output shaft (2) are coupled to one another, wherein a torque generated by the first electric motor (11) is at least partially transmittable to the output shaft (2), and
- an energy storage device (9) for supplying the first and second electric motors (11, 12) with electric current,
wherein
the drive system (10) comprises an electronic control unit (8.1, 8.2) which is specified to control the output of the first and second electric motors (11, 12) in an emergency operation of the drive system (10), wherein
- the emergency operation is active when the first and second electric motors (11, 12) cannot be supplied with electric current by way of the energy storage device (9), **characterized in that**
- the electronic control unit (8.1, 8.2) is specified to operate at least one of the first and second electric motors (11, 12) in emergency operation at least temporarily in a regenerative manner in order to convert an output applied to the drive shaft (1) by means of muscle force into electric energy by way of which an infinitely variable variation of the transmission ratio of the overriding gear (15), even in emergency operation, is enabled and is able to be controlled by the electronic control unit (8.1, 8.2).

2. Drive system according to Claim 1, **characterized in that** the electronic control unit (8.1, 8.2) for controlling the output of the first and second electric motors (11, 12) in emergency operation is specified to actuate one of the electric motors (11, 12) with the aim of adjusting an electrical energy balance within the drive system (10) to zero.

3. Drive system according to Claim 2, **characterized in that** the electronic control unit (8.1, 8.2) for controlling the output of the first and second electric motors (11, 12) in emergency operation is specified
- to actuate the second electric motor (12) in accordance with normal operation, in which the energy storage device (9) supplies the first and second electric motors (11, 12) with electric current, and
- to actuate the first electric motor (11) with the aim of adjusting an electrical energy balance within the drive system (10) to zero.

4. Drive system according to Claim 2 or 3, **characterized in that** the electronic control unit (8.1, 8.2) for controlling the output of the first and second electric motors (11, 12) in emergency operation is specified to take into account a power consumption of at least one consumer (V) supplied with electric energy by way of the drive system (10) and/or a power loss for adjusting the one electric motor (11).

5. Drive system according to one of the preceding claims, **characterized in that** the drive system (10) comprises at least one energy buffer (60, 61) which is connected to the electronic control unit (8.1, 8.2).

6. Drive system according to Claim 5, **characterized in that** the electronic control unit (8.1, 8.2) for controlling the output of the first and second electric motors (11, 12) in emergency operation is specified to actuate one of the electric motors (11, 12) with the aim of keeping a DC link voltage provided by way of the energy buffer (61) at a certain voltage value.

7. Drive system according to Claim 6, **characterized in that** the electronic control unit (8.1, 8.2) is specified to process a measurement signal (u_{IST}) which is representative of the current DC link voltage of the drive system (10).

8. Drive system according to Claim 7, **characterized in that** the electronic control unit (8.1, 8.2) is specified to compare an actual voltage value recorded on the basis of the measurement signal (u_{IST}) with at least one setpoint voltage value (u_{SOLL1}, u_{SOLL2}).

9. Drive system according to Claim 3 and according to Claim 8, **characterized in that** the electronic control unit (8.1, 8.2) is specified to actuate the first electric motor (11) as a function of the measurement signal (u_{IST}) representative of the current DC link voltage, specifically in such a manner that, when the actual voltage value drops below a first setpoint voltage value (u_{SOLL1}),
- the first electric motor (11) is actuated to a higher generation of electricity when the first electric motor (11) is currently operated in a regenerative manner, or
- the first electric motor (11) is actuated to a lower power consumption when the first electric motor (11) is currently operated as a motor.

10. Drive system according to Claim 3 and according to Claim 8 or 9, **characterized in that** the electronic control unit (8.1, 8.2) is specified to actuate the first electric motor (11) as a function of the measurement signal (u_{IST}) representative of the current DC link voltage, specifically in such a manner that, when the actual voltage value increases beyond a second setpoint voltage value (u_{SOLL2}),
- the first electric motor (11) is actuated to a lower generation of electricity when the first electric motor (11) is currently operated in a regenerative manner, or
- the first electric motor (11) is actuated to a higher power consumption when the first electric motor (11) is currently operated as a motor.

11. Electric bicycle having a drive system according to one of Claims 1 to 10.

12. Method for controlling a drive system (10) for an electric bicycle, wherein the drive system (10) comprises the following:
- a drive shaft (1),
- an output shaft (2) for driving a wheel of the electric bicycle,
- a first electric motor (11) which drives a first rotor shaft (3),
- a second electric motor (12) which drives a second rotor shaft (4),
- an overriding gear (15), the gear ratio of which is infinitely adjustable with the aid of the first and second electric motors (11, 12) and by way of which the drive shaft (1) and the output shaft (2) are coupled to one another, wherein a torque generated by the first electric motor (11) is at least partially transmittable to the output shaft (2), and
- an energy storage device (9) for supplying the first and second electric motors (11, 12) with electric current,
wherein
the drive system (10) is operated in emergency operation when the first and second electric motors (11, 12) cannot be supplied with electric current by way of the energy storage device (9), **characterized in that** at least one of the first and second electric motors (11, 12) is operated in the emergency operation at least temporarily in a regenerative manner in order to convert an output applied to the drive shaft (1) by means of muscle force into electric energy by way of which an infinitely variable variation of the transmission ratio of the overriding gear (15), even in emergency operation, is enabled and controlled.

13. Method according to Claim 12, **characterized in that** in the emergency operation
- the second electric motor (12) is actuated in accordance with normal operation in which the energy storage device (9) supplies the first and second electric motors (11, 12) with electric current, and
- the first electric motor (11) is actuated with the aim of adjusting an electrical energy balance within the drive system (10) to zero.

14. Method according to Claim 12 or 13, **characterized in that** the drive system (10) comprises at least one energy buffer (60, 61) for generating a DC link voltage in emergency operation for supplying at least one of the electric motors (11, 12) with electric current, and one of the electric motors (11, 12) is actuated with the aim of keeping the DC link voltage at a certain voltage value.

15. Computer program product, comprising instructions which, when executed by at least one processor of an electronic control unit (8.1, 8.2) for a drive system (10) of an electric bicycle, prompt the at least one processor to carry out a method according to one of Claims 12 to 14.

## Revendications

1. Système d'entraînement pour une bicyclette électrique, avec
- un arbre d'entraînement (1),
- un arbre de sortie (2) destiné à entraîner une roue de la bicyclette électrique,
- un premier moteur électrique (11), qui entraîne un premier arbre de rotor (3),
- un deuxième moteur électrique (12), qui entraîne un deuxième arbre de rotor (4),
- un engrenage de modulation de vitesse (15), dont le rapport de transmission peut être réglé en continu à l'aide des premier et deuxième moteurs électriques (11, 12) et par lequel l'arbre d'entraînement (1) et l'arbre de sortie (2) sont couplés l'un à l'autre, un couple de rotation généré par le premier moteur électrique (11) pouvant être transmis au moins en partie à l'arbre de sortie (2), et
- un accumulateur d'énergie (9) pour l'alimentation des premier et deuxième moteurs électriques (11, 12) en courant électrique,
le système d'entraînement (10) comprenant une électronique de commande (8.1, 8.2), qui est mise au point pour une commande de puissance des premier et deuxième moteurs électriques (11, 12) dans un mode d'urgence du système d'entraînement (10),
- le mode d'urgence étant actif lorsque les premier et deuxième moteurs électriques (11, 12) ne peuvent pas être alimentés en courant électrique par l'accumulateur d'énergie (9), **caractérisé en ce que**
- l'électronique de commande (8.1, 8.2) est mise au point pour actionner au moins temporairement par un générateur au moins un des premier et deuxième moteurs électriques (11, 12) dans le mode d'urgence pour convertir une puissance appliquée sur un arbre d'entraînement (1) par une force musculaire en énergie électrique, avec laquelle une variation continue du rapport de transmission de l'engrenage de modulation de vitesse (15) est également rendue possible dans le mode d'urgence et peut être commandée par l'électronique de commande (8.1, 8.2).

2. Système d'entraînement selon la revendication 1, **caractérisé en ce que** l'électronique de commande (8.1, 8.2) pour la commande de puissance des premier et deuxième moteurs électriques (11, 12) est mise au point dans le mode d'urgence pour piloter un des moteurs électriques (11, 12) avec pour objectif de régler sur zéro un bilan énergétique électrique à l'intérieur du système d'entraînement (10).

3. Système d'entraînement selon la revendication 2, **caractérisé en ce que** l'électronique de puissance (8.1, 8.2) pour la commande de puissance des premier et deuxième moteurs électriques (11, 12) est mise au point dans le mode d'urgence
- pour piloter le deuxième moteur électrique (12) conformément à un mode normal, dans lequel l'alimentation des premier et deuxième moteurs électriques (11, 12) en courant électrique est effectuée par l'accumulateur d'énergie (9), et
- pour piloter le premier moteur électrique (11) avec pour objectif de régler sur zéro un bilan énergétique électrique à l'intérieur du système d'entraînement (10).

4. Système d'entraînement selon la revendication 2 ou 3, **caractérisé en ce que** l'électronique de commande (8.1, 8.2) pour la commande de puissance des premier et deuxième moteurs électriques (11, 12) est mise au point dans le mode d'urgence pour tenir compte d'une absorption de puissance d'au moins un consommateur (V) alimenté en énergie électrique par le système d'entraînement (10) et/ou d'une dissipation de puissance pour le réglage du moteur électrique (11).

5. Système d'entraînement selon l'une des revendications précédentes, **caractérisé en ce que** le système d'entraînement (10) comprend au moins un tampon d'énergie (60, 61) relié à l'électronique de commande (8.1, 8.2).

6. Système d'entraînement selon la revendication 5, **caractérisé en ce que** l'électronique de commande (8.1, 8.2) pour la commande de puissance des premier et deuxième moteurs électriques (11, 12) est mise au point dans le mode d'urgence pour piloter un des moteurs électriques (11, 12) avec pour objectif de maintenir une tension de circuit intermédiaire fournie par le tampon d'énergie (61) sur une valeur de tension définie.

7. Système d'entraînement selon la revendication 6, **caractérisé en ce que** l'électronique de commande (8.1, 8.2) est mise au point pour le traitement d'un signal de mesure (u_{IST}), qui représente la tension de circuit intermédiaire actuelle du système d'entraînement (10).

8. Système d'entraînement selon la revendication 7, **caractérisé en ce que** l'électronique de commande (8.1, 8.2) est mise au point pour comparer une valeur de tension réelle détectée sur la base du signal de mesure (u_{IST}) à au moins une valeur de tension théorique (u_{SOLL1}, u_{SOLL2}).

9. Système d'entraînement selon la revendication 3 et la revendication 8, **caractérisé en ce que** l'électronique de commande (8.1, 8.2) est mise au point pour piloter le premier moteur électrique (11) en fonction du signal de mesure (u_{IST}) représentant la tension de circuit intermédiaire actuelle, à savoir de telle manière que, lorsque la valeur de tension réelle chute sous une première valeur de tension théorique (u_{SOLL1}),
- le premier moteur électrique (11) est piloté pour une génération de courant plus élevée lorsque le premier moteur électrique (11) est actionné actuellement par un générateur, ou
- le premier moteur électrique (11) est piloté pour une absorption de puissance plus faible lorsque le premier moteur électrique (11) est actionné actuellement par un moteur.

10. Système d'entraînement selon la revendication 3 et la revendication 8 ou 9, **caractérisé en ce que** l'électronique de commande (8.1, 8.2) est mise au point pour piloter le premier moteur électrique (11) en fonction du signal de mesure (u_{IST}) représentant la tension de circuit intermédiaire actuelle, à savoir de telle manière que, lorsque la valeur de tension réelle passe au-dessus d'une deuxième valeur de tension théorique (u_{SOLL2}),
- le premier moteur électrique (11) est piloté pour une génération de courant plus faible lorsque le premier moteur électrique (11) est actionné actuellement par un générateur, ou
- le premier moteur électrique (11) est piloté pour une absorption de puissance plus élevée lorsque le premier moteur électrique (11) est actionné actuellement par un moteur.

11. Roue de bicyclette électrique avec un système d'entraînement selon l'une des revendications 1 à 10.

12. Procédé de commande d'un système d'entraînement (10) pour une roue de bicyclette électrique, le système d'entraînement (10) comprenant ce qui suit :
- un arbre d'entraînement (1),
- un arbre de sortie (2) destiné à entraîner une roue de la bicyclette électrique,
- un premier moteur électrique (11), qui entraîne un premier arbre de rotor (3),
- un deuxième moteur électrique (12), qui entraîne un deuxième arbre de rotor (4),
- un engrenage de modulation de vitesse (15), dont le rapport de transmission peut être réglé en continu à l'aide des premier et deuxième moteurs électriques (11, 12) et par lequel l'arbre d'entraînement (1) et l'arbre de sortie (2) sont couplés l'un à l'autre, un couple de rotation généré par le premier moteur électrique (11) pouvant être transmis au moins en partie à l'arbre de sortie (2), et
- un accumulateur d'énergie (9) pour l'alimentation des premier et deuxième moteurs électriques (11, 12) en courant électrique,
le système d'entraînement (10) fonctionnant dans un mode d'urgence, lorsque les premier et deuxième moteurs électriques (11, 12) ne peuvent pas être alimentés en courant électrique par l'accumulateur d'énergie (9),
**caractérisé en ce que** dans le mode d'urgence au moins un des premier et deuxième moteurs électriques (11, 12) est actionné au moins temporairement par un générateur pour convertir une puissance appliquée sur l'arbre d'entraînement (1) par la force musculaire en énergie électrique, avec laquelle une variation continue du rapport de transmission de l'engrenage de modulation de vitesse (15) est également rendue possible dans le mode d'urgence et est commandée.

13. Procédé selon la revendication 12, **caractérisé en ce que** dans le mode d'urgence
- le deuxième moteur électrique (12) est piloté conformément à un mode normal, dans lequel l'alimentation des premier et deuxième moteurs électriques (11, 12) en courant électrique est effectuée par l'accumulateur d'énergie (9), et
- le premier moteur électrique (11) est piloté avec pour objectif de régler sur zéro un bilan énergétique électrique à l'intérieur du système d'entraînement (10).

14. Procédé selon la revendication 12 ou 13, **caractérisé en ce que** le système d'entraînement (10) comprend au moins un tampon d'énergie (60, 61) destiné à générer une tension de circuit intermédiaire dans le mode d'urgence pour l'alimentation d'au moins un des moteurs électriques (11, 12) en courant électrique et un des moteurs électriques (11, 12) est piloté avec pour objectif de maintenir la tension de circuit intermédiaire sur une valeur de tension définie.

15. Produit-programme d'ordinateur comportant des instructions, qui, lors d'une exécution par au moins un processeur d'une électronique de commande (8.1, 8.2) pour un système d'entraînement (10) d'une roue de bicyclette électrique, amènent l'au moins un processeur à exécuter un procédé selon l'une des revendications 12 à 14.
